# EUROPÄISCHE PATENTSCHRIFT

(11) **EP 2 373 434 B1**
(45) Veröffentlichungstag und Bekanntmachung des Hinweises auf die Patenterteilung: **08.01.2014**
(21) Anmeldenummer: 09747804.4
(22) Anmeldetag: 16.10.2009
(51) Int. Cl.: B06B 1/02, G01S 7/524, G01S 15/93

(54) **ERFASSUNGSVORRICHTUNG UND VERFAHREN ZUM ERFASSEN EINES UMFELDES EINES FAHRZEUGS**
DETECTION DEVICE AND METHOD FOR DETECTING AN ENVIRONMENT OF A VEHICLE
DISPOSITIF ET PROCÉDÉ DE DÉTECTION DU CHAMP PÉRIPHÉRIQUE D'UN VÉHICULE

(30) Priorität: 04.12.2008 DE 102008044366
(43) Veröffentlichungstag der Anmeldung: 12.10.2011
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2009/063523
(87) Internationale Veröffentlichungsnummer: WO 2010/063510

(56) Entgegenhaltungen:
- EP-A1- 0 320 695
- EP-A2- 1 231 481
- DE-A1- 3 929 243
- DE-A1- 10 145 292
- US-A- 4 606 015

## Beschreibung

Die Erfindung betrifft eine Erfassungsvorrichtung, insbesondere zum Erfassen eines Umfeldes eines Fahrzeugs. Die Erfassungsvorrichtung weist wenigstens einen, bevorzugt mehrere Ultraschallwandler und einen mit dem wenigstens einen Ultraschallwandler verbundenen Sendepulsmodulator auf. Die Erfassungsvorrichtung weist auch einen mit dem wenigstens einen Ultraschallwandler verbundenen Empfänger auf. Der Sendepulsmodulator ist ausgebildet, ein pulsmoduliertes Sendesignal zu erzeugen und dieses zum Schallwandeln an den Ultraschallwandler zu senden. Der Empfänger ist ausgebildet, ein von dem Ultraschallwandler erzeugtes, insbesondere ein Ultraschallecho repräsentierendes Antwortsignal zu empfangen und in Abhängigkeit des Antwortsignals einen Abstand oder eine zeitliche Ableitung des Abstandes des Ultraschallwandlers zu einem Objekt zu ermitteln und ein den Abstand repräsentierendes Ausgangssignal zu erzeugen.

Aus der EP 1 231 481 A2 ist ein Verfahren zum Betreiben einer Einparkhilfe eines Kraftfahrzeugs mit einer Mehrzahl von Ultraschallwandlern bekannt, bei dem eine Trennung von zeitgleich ausgesendeten, reflektierten Sendesignalen unter Verwendung von zueinander verschiedenen Sendepulsen für jeden Ultraschallwandler in Verbindung mit empfängerseitig im Signalpfad angeordneten signalangepassten Filtern angewendet wird. Die zueinander verschiedenen Sendepulse sind jeweils durch ein Chirp-Signal mit zeitlich zu- oder abnehmender Trägerfrequenz oder Sendepulse mit konstanter Trägerfrequenz gebildet.

Aus der EP 0 320 695 A1 ist eine Einrichtung zur berührungslosen Abstandsmessung mittels eines elektroakustischen Wandlers bekannt. Die Abklingzeit der Wandleramplitude wird durch eine Änderung der Sendefrequenz variiert. Dabei wird die Sendefrequenz abhängig vom

Objektabstand ausgewählt, so dass die Abklingzeit bei kleinen Abständen kürzer ist, als bei großen Abständen.

Aus der DE 3929243 A1 ist ein Verfahren zur Verkürzung der Abklingzeit eines Ultraschallwandlers auf Piezo-Basis bekannt. Dabei wird der Sendegenerator nach Erzeugung der Resonanzfrequenz unmittelbar und kurzzeitig auf eine Frequenz umgeschaltet, die deutlich höher als die Resonanzfrequenz ist. Dem liegt die Erkenntnis zugrunde, dass ein Ultraschallwandler bei einer Anregung mit einer Frequenz, die sich deutlich von der Resonanzfrequenz unterscheidet, sehr viel schneller ausschwingt als beim Betrieb in oder nahe der Resonanzfrequenz.

Aus der DE 101 45 292 A1 ist ein Verfahren zur Abstandsmessung mittels Ultraschall bekannt, bei dem unterschiedlich lange Sendeimpulse verwendet werden. Die Länge der Sendeimpulse ist dabei proportional zum gemessenen zeitlichen Abstand des Senders zu einem Hindernis.

Aus der US 4 606 015 A ist eine Vorrichtung zur Objekterkennung mittels Ultraschall bekannt. Die Vorrichtung ist in der Lage Ultraschallpulse unterschiedlichen Typs auszusenden. Ein erster Typ Ultraschallpuls besitzt eine kurze zeitliche Dauer und ist damit geeignet, Objekte nahe am Sender zu erkennen. Der zweite Typ Ultraschallpuls weist eine lange zeitliche Dauer auf und erreicht damit den nötigen Schalldruck auch Objekte in größerer Entfernung zu erkennen.

Bei der Erfassungsvorrichtung der eingangsgenannten Art weist das pulsmodulierte Sendesignal - bevorzugt für einen bestimmten Ultraschallwandler - erfindungsgemäß zeitlich aufeinanderfolgende Sendepulse mit jeweils einer Sendepulsdauer auf. Bevorzugt weist das pulsmodulierte Sendesignal auch Pulspausen mit jeweils einer Pulspausendauer auf. Dadurch ist die Trägerfrequenz durch die Sendepulse und/oder Pulspausen moduliert.

Bevorzugt weist wenigstens ein Sendepuls der Sendepulse einen zeitlichen Sendepulsabschnitt mit einer zu- und/oder abnehmenden Trägerfrequenz und einen zeitlichen Sendepulsabschnitt mit einer konstanten Trägerfrequenz auf.

Bevorzugt schließen die Sendepulsabschnitte zeitlich aneinander an. Weiter bevorzugt ist der Sendepuls durch die Sendepulsabschnitte gebildet.

Bevorzugt beträgt die Pulspausendauer mindestens so lange wie die Sendepulsdauer, weiter bevorzugt wenigstens das zehnfache wie die Sendepuldauer.

Durch die Erfassungsvorrichtung der vorbeschriebenen Art wird vorteilhaft der wenigstens eine Sendepuls mit einem zeitlichen Abschnitt mit einer konstanten Trägerfrequenz und mit einem einen Chirp-Sendepuls bildenden zeitlichen Abschnitt mit einer zu- und/oder abnehmenden Trägerfrequenz erzeugt. Die Trägerfrequenz ist durch die Sendepulse und/oder Pulspausen moduliert. Bevorzugt kann von dem Empfänger während einer Pulspause ein reflektierter Sendepuls empfangen werden.

Bevorzugt ist die Erfassungsvorrichtung ausgebildet, unabhängig oder zusätzlich von dem Abstand eine Geschwindigkeit, insbesondere Relativgeschwindigkeit zu dem wenigstens einen Objekt oder eine Beschleunigung zu dem wenigstens einen Objekt zu ermitteln, wobei das Ausgangssignal die Geschwindigkeit und/oder die Beschleunigung repräsentiert. Dazu kann beispielsweise für Abstand, Geschwindigkeit oder Beschleunigung jeweils ein gesondertes Ausgangssignal erzeugt werden oder ein insbesondere digitales Ausgangssignal, das alle erfassten Größen gemeinsam repräsentiert. Die Erfassungsvorrichtung ist beispielsweise ausgebildet, die Geschwindigkeit, insbesondere eine Geschwindigkeitsrichtung und/oder einen Geschwindigkeitsbetrag und/oder die Beschleunigung mittels Pulsechorücklaufzeiterfassung und/oder Dopplerfrequenzversatzerfassung zu erfassen.

In einer vorteilhaften Ausführungsform ist die Erfassungsvorrichtung ausgebildet, in Abhängigkeit von dem Ausgangssignal ein Umfeld des Fahrzeugs zu erfassen und in Abhängigkeit von wenigstens einem vorbestimmten Parameter für den Abstand, die Geschwindigkeit oder die Beschleunigung ein Signal, insbesondere ein Warnsignal zu erzeugen und dieses auszugeben. Beispielsweise kann ein Fahrer des Fahrzeugs, insbesondere Kraftfahrzeugs, so gewarnt werden, wenn sich das Fahrzeug auf ein Objekt, insbesondere ein anderes Fahrzeug, einen Baum, eine Leitplanke oder ein Hindernis hinbewegt. Beispielsweise kann die Erfassungsvorrichtung mit einem ABS- und/oder ESR-System des Fahrzeugs (ABS = Automatisches-BremsSystem, ESR = Elektronische-Schlupf-Regelung)verbunden sein und so mittels des Ausgangssignals weitere Parameter zum Optimieren eines Fahrverhaltens oder eines Bremsweges des Fahrzeugs an das ABS- und/oder ESR-System liefern.

Beispielsweise kann die Erfassungsvorrichtung mit einem Airbag wirkverbunden sein und der Airbag in Abhängigkeit von dem Ausgangssignal ausgelöst und/oder in seinem Reaktionsverhalten verändert werden. Denkbar ist auch eine Verbindung der Erfassungsvorrichtung mit einem Spurhalteassistenzvorrichtung, welche in Abhängigkeit von dem Ausgangssignal eine Lenkanweisung an den Fahrer ausgibt und/oder einen Lenkeingriff in einen Lenkvorgang erzeugt. Denkbar ist auch ein Beschleunigungs- oder Bremsassistenzvorrichtung, welche ausgebildet ist, in Abhängigkeit von dem Ausgangssignal das Fahrzeug zu beschleunigen oder Abzubremsen. Dadurch kann auf eine Objektszene vorteilhaft gezielt Einfluss genommen werden.

Beispielsweise kann die Erfassungsvorrichtung ein Display aufweisen und ein Umfeldszenario des erfassten Umfeldes mittels des Displays sichtbar wiedergeben, so dass der Fahrer über das wenigstens eine Objekt in seinem Umfeld, insbesondere dessen Abstand und/oder Relativbewegung zu dem Fahrzeug informiert ist. Das wenigstens eine Objekt kann sich beispielsweise vor oder hinter dem Fahrzeug befinden. Beispielsweise kann der Fahrer so über gefährliche Situationen im Umfeld des Fahrzeugs gewarnt werden, wenn beispielsweise ein Sicherheitsabstand zu einem vorausfahrenden anderen Fahrzeug unterschritten wird, eine schnelle Annäherung, insbesondere Geschwindigkeit und/oder Beschleunigung an das andere Fahrzeug erfolgt oder schnell auf ein Hindernis zugefahren wird. So kann der Fahrer vorteilhaft aus einem gefährlichen "Sekundenschlaf" geweckt werden, wenn das Fahrzeug sich beispielsweise - kontinuierlich bewegend oder schnell beschleunigend - dem Objekt, insbesondere einer Leitplanke einer Strasse nähert.

Die Erfassung von Objekten des Umfeldes - auch von Objekten die beispielsweise in einem großen Abstand von 10 bis 30 Metern von dem Fahrzeug entfernt sind, kann durch die Erfassungsvorrichtung bevorzugt mittels Erzeugung wenigstens eines geeigneten, der Umfeldsituation angepassten Sendepulses oder einer Folge geeigneter Sendepulse erfolgen.

Die vorab erwähnte Kombination von einem Sendepulsabschnitt mit einer konstanten Trägerfrequenz und einem Chirp-Sendepulsabschnitt gemeinsam in einem Sendepuls, oder gemeinsam den Sendepuls bildend, bewirkt vorteilhaft, dass Übertragungseigenschaften des Ultraschallwandlers gezielt genutzt werden können, um bei zueinander verschiedenen Reflexionsbedingungen und/oder Abständen des wenigstens einen Objekts, den Abstand, die Geschwindigkeit und/oder die Beschleunigung zum Ultraschallwandler sicher zu erfassen. Weiter vorteilhaft kann so mittels eines solchen Sendepulses eine Resonanzfrequenz des Ultraschallwandlers innerhalb des Sendepulsabschnitts mit zu- und/oder abnehmender Trägerfrequenz, im Folgenden auch Chirp-Sendepulsabschnitt genannt, gezielt ausschlossen sein und/oder die konstante Trägerfrequenz innerhalb des Sendepulsabschnitts mit konstanter Trägerfrequenz gezielt der Resonanzfrequenz des Ultraschallwandlers entsprechen. Dadurch wir vorteilhaft im Falle des Chirp-Sendepulsabschnittes eine kurze Ausschwingzeit des Ultraschallwandlers erreicht, um so während der Pulspause schnell wieder für ein Echo empfangsbereit zu sein.

Es wurde nämlich erfindungsgemäß erkannt, dass der Ultraschallwandler bei seiner Resonanzfrequenz lange braucht, um ausgehend von einem eingeschwungenen Zustand wieder auszuschwingen, und nach einem Ausschwingen zu einem erneuten Empfangen eines reflektierten Ultraschallsignals bereit zu sein, oder um eine Taubheit des Ultraschallwandlers beim Empfangen, verursacht durch Übersprechen, gering zu halten. Weiter wurde erkannt, dass wenn sich das zu erfassende Objekt im Nahfeld des Ultraschallwandlers befindet, die vom Ultraschallwandler abzugebende Sendepulsenergie nicht so groß sein braucht wie außerhalb des Nahfeldes, so dass der genutzte Frequenzbereich des Ultraschallwandlers die Resonanzfrequenz des Ultraschallwandlers vorteilhaft ausschließen kann, um so nicht lange nachzuschwingen.

Bevorzugt weist der Ultraschallwandler ein Piezoelement auf, welches mit einer Membran insbesondere mittels eines Haftmittels wirkverbunden ist. Die Membran ist bevorzugt durch ein Metallplättchen mit einer vorbestimmten Steifheit gebildet, wobei die Steifheit derart gewählt ist, dass der Wandler gegenüber Umwelteinflüssen und/oder mechanischen Einwirkungen hinreichend robust ausgebildet ist. Das bewirkt eine geringe Dämpfung eines Feder-Masse-Systems, gebildet aus der Membran als Masse und dem Piezoelement als Feder, so dass ein solcher Wandler eine schmalbandige Abstrahlcharakteristik in Abhängigkeit von der Frequenz aufweist. Erfindungsgemäß wird dieses schmalbandige Abstrahlverhalten genutzt, um außerhalb der Resonanzfrequenz kleinere Schalleistungen abzustrahlen als bei der Resonanzfrequenz oder beim Empfangen mittels desselben Ultraschallwandlers eine Filterwirkung für Echosignale ausserhalb der Resonanzfrequenz zu erzielen. Weiter wurde erkannt, dass nämlich zur Objekterfassung im Nahfeld, beispielsweise bei einem Abstand kleiner als 2 Meter, eine kleinere Schalleistung beim Senden ausreicht als bei größeren Entfernungen, weil die Abstandserfassung bevorzugt nicht auf eine Signalleistung sondern auf einer Laufzeitmessung des Sendepulses beruht.

Bevorzugt weist die Erfassungsvorrichtung mehrere Ultraschallwandler auf. Im Falle mehrerer Ultraschallwandler kann so beispielsweise ein erster Ultraschallwandler einen Sendepuls senden, und ein weiterer Ultraschallwandler den zurückreflektierten Sendepuls als Echo empfangen. Denkbar ist auch eine Erfassungsvorrichtung, die derart ausgebildet ist, dass eine Sendepulsfolge umfassend aufeinenderfolgende, durch Pulspausen voneinander getrennte Sendepulse von zueinander verschiedenen Ultraschallwandlern erzeugt wird.

Weiter vorteilhaft kann von dem Ultraschallwandler das Ultraschallecho so früher empfangen werden als wenn der Ultraschallwandler im Bereich oder genau bei der Resonanzfrequenz betrieben wird. Dadurch wird vorteilhaft ein Übersprechen zu räumlich benachbarten Ultraschallwandlern gering gehalten, so dass Kreuzechos zueinander verschiedener Ultraschallwandler bei einer Auswertung des Antwortsignals weniger stören können.

Beilspielsweise kann der Sendepulsmodulator einen Chirp-Sendepuls aussenden, während ein Sendepuls mit konstanter Trägerfrequenz noch unterwegs ist um später als Ultraschallecho empfangen zu werden.

Weiter wurde erkannt, dass der Ultraschallwandler bei seiner Resonanzfrequenz insbesondere große Abstände überbrücken kann, um ein Objekt zu erfassen. Bevorzugt kann zum Erfassen des Objekts in einem insbesondere großen Abstand, beispielsweise größer als 2 Meter, der Ultraschallwandler bei seiner Resonanzfrequenz betrieben werden, um so vorteilhaft eine hohe Sendeleistung abzugeben.

In einer bevorzugten Ausführungsform der Erfassungsvorrichtung dauert bei wenigstens einem Sendepuls der Sendepulsabschnitt mit der konstanten Trägerfrequenz länger an, als der Sendepulsabschnitt mit der zu- und/oder abnehmenden Trägerfrequenz. Durch einen solchen Sendepuls kann vorteilhaft ein Objekt erfasst werden, welches sich in einem großen Abstand zu dem Ultraschallwandler befindet.

Der in einer bevorzugten Ausführungsform der Erfassungsvorrichtung folgt bei wenigstens einem Sendepuls der Sendepulsabschnitt mit der konstanten Trägerfrequenz auf den Sendepulsabschnitt mit zu- und/oder abnehmenden Trägerfrequenz. Bei dieser Ausführungsform des Sendepulses, welcher bevorzugt aus den vorgezeichneten Sendepulsabschnitten gebildet ist, kann vorteilhaft ein kleiner Abstand zu einem Objekt, bevorzugt - im Falle von wenigstens zwei oder mehreren Ultraschallwandlern - von einem nicht den Sendepuls aussendenden Ultraschallwandler, schnell erfasst werden.

Die Erfassungsvorrichtung ist bevorzugt ausgebildet, eine Sendepuls-Art des Sendepulses, insbesondere wie vorab beschrieben, in Abhängigkeit von dem Objektabstand zu wählen und den Sendepuls gemäß der Sendepuls-Art zu erzeugen.

In einer bevorzugten Ausführungsform ist der Sendepulsmodulator ausgebildet, eine Pulsfolgefrequenz, insbesondere durch Ändern der Pulspausendauer, der zeitlich aufeinander folgenden Sendepulse des gepulsten Sendesignals insbesondere in Abhängigkeit von einem Objektabstand des wenigstens einen Objekts zu dem Ultraschallwandler zu ändern. Weiter bevorzugt ist der Sendepulsmodulator ausgebildet, im Falle eines größeren Objektabstands des Objekts zu dem Ultraschallwandler die Pulsfolgefrequenz zu verringern und im Falle eines kleineren Abstandes des Objekts zu dem Ultraschallwandler die Pulspausendauer und/oder die Sendepulsdauer zu verringern. Die Pulsfolgefrequenz und/oder der Sendepuls, insbesondere eine Sendepuls-Art kann so vorteilhaft ein eine Pulsechorücklaufzeit angepasst werden.

In einer bevorzugten Ausführungsform weisen die zeitlich aufeinanderfolgenden Sendepulse Sendepulse mit jeweils wenigstens zwei zueinander verschiedenen Sendepulsdauern auf. Der Sendepulsmodulator kann dazu beispielsweise ausgebildet sein, im Falle eines weiter beanstandeten Objekts Sendepulse mit einer langen Sendepulsdauer zu erzeugen und im Falle eines näher beanstandeten Objekts Sendepulse mit einer kurzen Sendepulsdauer zu erzeugen. Beispielsweise kann die lange Sendepulsdauer mehr als eine Millisekunde betragen. Die kurze Sendepulsdauer kann beispielsweise bis zu einer halben Millisekunde betragen, wobei bevorzugt die Dauer des Sensepulsabschnitts mit konstanter Trägerfrequenz im vergleich zu den Sendepulsen mit der langen Sendepulsdauer verkürzt ist.

Bevorzugt ist die Erfassungsvorrichtung ausgebildet, zeitlich aufeinanderfolgende Sendepulse zu erzeugen, wobei zeitlich insbesondere mittelbar aufeinanderfolgende Sendepulse mit einer vorbestimmten, insbesondere langen Sendepulsdauer wenigstens zwei oder eine Mehrzahl von Sendepulsen mit einer im Vergleich zu der langen Sendepulsdauer kürzeren Sendepulsdauer einschließen. In einer vorteilhaften Ausführungsvariante der Erfassungsvorrichtung weist der Sendepulsabschnitt mit der zu- und/oder abnehmenden Trägerfrequenz einen Kurvenverlauf auf, welcher einem Polynom wenigstens zweiten Grades folgt. Dadurch kann vorteilhaft eine zeitliche Verteilung einer Sendeenergie des Sendepulses frequenzabhängig an eine Übertragungsfunktion des Ultraschallwandlers angepasst sein. Weiter vorteilhaft wird dadurch ein Einfluss einer durch Relativbewegung des Objekts verursachten Dopplerfrequenzverschiebung genauer bestimmbar und so eine hohe Erfassungsgenauigkeit des Abstands, der Geschwindigkeit oder der Beschleunigung erreicht. Erfindungsgemäß weist bei wenigstens einem Sendepuls der Sendepulsabschnitt mit der zu- und abnehmenden Trägerfrequenz einen zeitlichen Sendepulsabschnitt auf, bei dem durch das Zu- und Abnehmen eine Scheitelfrequenz gebildet ist, welche im Bereich an einen Anschluss an den Sendepulsabschnitt mit der konstanten Trägerfrequenz ein Überschwingen der konstanten Trägerfrequenz bildet. Durch das Überschwingen der konstanten Trägerfrequenz kann vorteilhaft ein verzögertes Einschwingen von Übertragungsweg-Gliedern, beispielsweise gebildet durch den Ultraschallwandler, den Sendepulsmodulator oder den Empfänger ausgeglichen werden. Weiter vorteilhaft kann durch das Überschwingen einen Frequenzbereich des Ultraschallwandlers, in welchem der Ultraschallwandler eine maximale Sendeleistung erzeugen kann, so optimal ausgenutzt werden. Der Sendepulsabschnitt mit dem überschwingenden Frequenzverlauf ist bevorzugt durch ein Polynom wenigstens dritten Grades gebildet, weiter bevorzugt durch ein Polynom siebten Grades.

In einer bevorzugten Ausführungsform der Erfassungsvorrichtung weist die Erfassungsvorrichtung ein Bandsperrfilter auf, welches im Signalpfad zwischen dem Sendepulsmodulator und dem Empfänger angeordnet ist. Weiter bevorzugt weist das Bandsperrfilter eine Bandsperrfrequenz auf, welche insbesondere in einem Übertragungsfrequenzgang des Bandsperrfilters einer Resonanzfrequenz des Ultraschallwandlers entspricht. Durch das Bandsperrfilter kann vorteilhaft das pulsmodulierte Sendesignal Spektralanteile ausserhalb der Resonanzfrequenz des Ultraschallwandlers aufweisen, welche eine größere Sendepulsamplitude aufweisen als ohne das Bandsperrfilter.

Vorteilhaft kann auch durch den Ultraschallwandler ein Filter gebildet sein, wobei eine Filtercharakteristik durch die Übertragungsfunktion des Ultraschallwandlers bestimmt ist.

Die Erfindung betrifft auch ein Verfahren zum Erfassen eines Abstandes mittels Ultraschall, bei dem mittels Ultraschall ein Sendesignal umfassend zeitlich aufeinanderfolgende Sendepulse mit jeweils einer Sendepulsdauer erzeugt wird, wobei wenigstens ein Sendepuls der Sendepulse einen zeitlichen Sendepulsabschnitt mit einer zu- und/oder abnehmenden Trägerfrequenz und einen zeitlichen Sendepulsabschnitt mit einer konstanten Trägerfrequenz aufweist. Bevorzugt weist das Sendesignal Pulspausen mit jeweils einer Pulspausendauer auf. Weiter bevorzugt weist der Sendepulsabschnitt mit der zu- und/oder abnehmenden Trägerfrequenz einen Kurvenverlauf eines Polynoms wenigstens zweiten Grades auf.

Die Erfindung wird nun im Folgenden anhand von Figuren und weiteren Ausführungsbeispielen beschrieben.
Figur 1 zeigt ein Ausführungsbeispiel für eine Erfassungsvorrichtung und ein Verfahren zum Erfassen eines Abstandes gemäß der Erfindung;
Figur 2 und Figur 3 zeigen jeweils Ausführungsbeispiele für Signale, welche von der in Figur 1 gezeigten Erfassungsvorrichtung 1 erzeugt worden sind;
Figur 3 zeigt ein Ausführungsbeispiel für Signale, welche von der in Figur 1 gezeigten Erfassungsvorrichtung erzeugt worden sind;
Figur 4 zeigt ein Ausführungsbeispiel für Signale, welche von der in Figur 1 gezeigten Erfassungsvorrichtung erzeugt worden sind;
Figur 5 zeigt ein Ausführungsbeispiel für Signalfolgen, welche von der in Figur 1 gezeigten Erfassungsvorrichtung erzeugt worden sind.

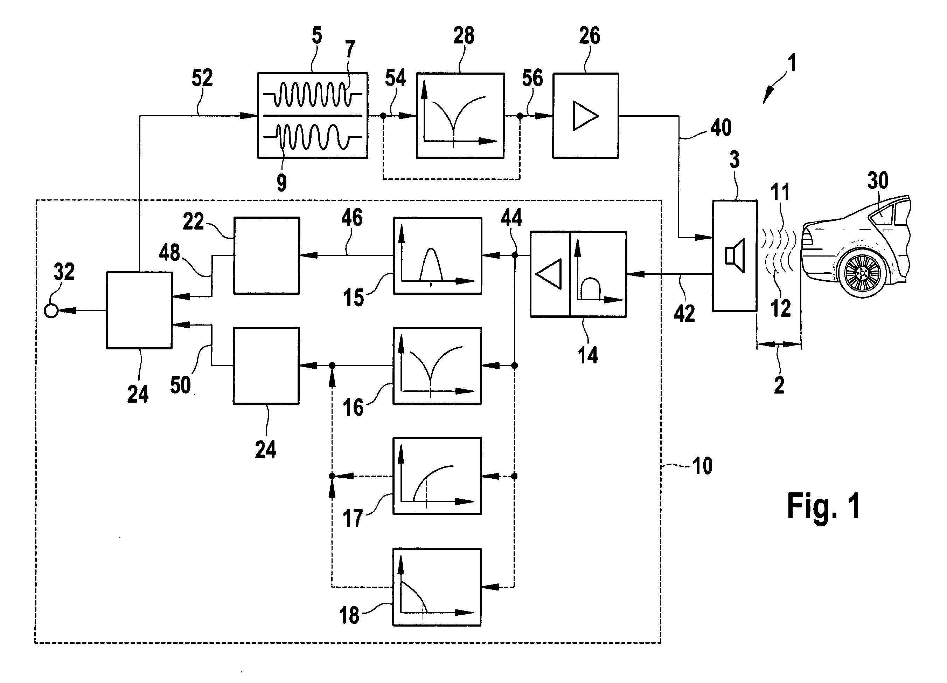

Figur 1 zeigt schematisch ein Ausführungsbeispiel für eine Erfassungsvorrichtung 1 und ein Verfahren zum Erfassen eines Abstands mittels Ultraschall. Die Erfassungsvorrichtung 1 weist einen Ultraschallwandler 3 und einen Sendepulsmodulator 5 auf. Der Ultraschallwandler 3 ist eingangsseitig mindestens mittelbar mit dem Sendepulsmodulator 5 verbunden. Der Sendepulsmodulator 5 ist ausgebildet, Sendepulse umfassend einen Sendepulsabschnitt 7 mit einer konstanten Trägerfrequenz und einen Chirp-Sendepulsabschnitt 9 mit einer zeitlich veränderbaren Trägerfrequenz, insbesondere in Abhängigkeit von einem eingangsseitig empfangenen Steuersignal - zu erzeugen und diese ausgangsseitig auszugeben.

Die Erfassungsvorrichtung kann zusätzlich zu dem Ultraschallwandler 3 weitere - in dieser Figur nicht dargestellte - Ultraschallwandler aufweisen, welche jeweils - entsprechend dem Ultraschallwandler 3 - mit dem Verstärker 26 verbunden sind. In diesem Ausführungsbeispiel ist der Ultraschallwandler 3 zum Senden und zum Empfangen vorgesehen. Beispielsweise weist die Erfassungsvorrichtung 1 mehrere Ultraschallwandler auf, wobei zueinander verschiedene Ultraschallwandler der Erfassungsvorrichtung 1 zum Senden und/oder Empfangen vorgesehen sind. Im Falle mehrerer Ultraschallwandler kann so beispielsweise ein Ultraschallwandler einen Sendepuls senden, und ein anderer Ultraschallwandler den zurückreflektierten Sendepuls als Echo empfangen.

Der Sendepulsmodulator 5 ist ausgangsseitig über eine Verbindungsleitung 54 mit einem Filter 28 verbunden. Das Filter 28 ist ausgangsseitig über eine Verbindungsleitung 56 mit einem Verstärker 26 verbunden, wobei der Verstärker 26 ausgangsseitig über eine Verbindungsleitung 40 mit dem Ultraschallwandler 3 verbunden ist. Der Sendepulsmodulator 5 kann in Abhängigkeit des eingangsseitig empfangenen Steuersignals einen Sendepuls mit einer vorbestimmten Sendepuls-Art erzeugen und dieses ausgangsseitig über die

Verbindungsleitung 54 an das Filter 28 und den Verstärker 26 senden. Der Verstärker 26 kann den über die Verbindungsleitung 54 empfangenen Sendepuls verstärken und als verstärkten Sendepuls über die Verbindungsleitung 56 an den Ultraschallwandler 3 senden. Das Filter 28 ist als Ausblend-Filter, insbesondere als Bandsperrfilter, Hochpassfilter oder Tiefpassfilter ausgebildet und blendet eine Frequenz aus, welche der konstanten Trägerfrequenz, insbesondere der Resonanzfrequenz des Ultraschallwandlers 3 entspricht. Das Filter 28 kann so einen Frequenzgang des Ultraschallwandlers 3 hinsichtlich einer Gesamt-Übertragungsfunktion eines mittels des Sendepulsmodulators 5, des Verstärkers 26 und des Ultraschallwandlers 3 gebildeten Senders begradigen.

Das Filter 28 kann in einer anderen Ausführungsform - wie in diesem Ausführungsbeispiel durch eine gestrichelte Verbindung zwischen der Verbindungsleitung 56 und der Verbindungsleitung 54 dargestellt - auch entfallen. Vorteilhaft kann dann der Sendepulsmodulator 5 ausgebildet sein, ein pulsmoduliertes und gemäß einer Übertragungsfunktion eines Bandsperrfilters gefiltertes Sendesignal zu erzeugen. Der Ultraschallwandler 3 ist ausgebildet, in Abhängigkeit von dem über die Verbindungsleitung 50 empfangenen - von dem Verstärker 26 verstärkten und dem Filter 28 gefilterten - gepulsten Sendesignal Ultraschallwellen 11 zu erzeugen, welche das gepulste Sendesignal repräsentieren. Die Ultraschallwellen 11 werden an dem Objekt 30 reflektiert und als reflektierte Ultraschallwellen 12 zum Ultraschallwandler 3 zurückgesendet. Der Ultraschallwandler 3 ist beim Empfangen wieder derart ausgeschwungen, dass ein Nachschwingen des Ultraschallwandlers 3 durch den zuvor erzeugten Sendepuls, der die Ultraschallwellen 11 erzeugt hat, wieder hinreichend abgeklungen ist, um einen reflektierten Sendepuls in Form der reflektierten Ultraschallwellen 12 zu empfangen.

Die Erfassungsvorrichtung 1 weist auch einen Empfänger 10 auf. Der Empfänger 10 weist einen Vorverstärker 14 auf, welche eingangsseitig über eine Verbindungsleitung 42 mit dem Ultraschallwandler 3 verbunden ist. Der Vorverstärker 14 ist ausgangsseitig über einen Verbindungsknoten 44 mit einem Filter 15 verbunden. Das Filter 15 ist als Bandpassfilter ausgebildet, wobei ein Frequenzband des Bandpasses die konstante Trägerfrequenz, insbesondere die Resonanzfrequenz des Ultraschallwandlers 3 einschließt. Das Filter 15 ist ausgangsseitig über eine Verbindungsleitung 46 mit einem Signal-Angepassten-Filter 22 (Matched-Filter) für Sendepulse mit einer konstanten Trägerfrequenz verbunden. Das Signal-Angepasste-Filter 22 ist ausgangsseitig über eine Verbindungsleitung 48 mit einer Verarbeitungseinheit 24 verbunden. Der Verbindungsknoten 44 ist auch mit einem Filter 16 verbunden. Das Filter 16 ist ein Bandsperr-Filter und ist ausgebildet, aus einem das Filter 16 passierenden Signal eine Frequenz auszublenden, welche der konstanten Trägerfrequenz, insbesondere der Resonanzfrequenz des Ultraschallwandlers 3 entspricht. Das Filter 16 ist ausgangsseitig mit einem Signal-Angepassten-Filter 20 (Matched-Filter) für wenigstens ein Chirp-Signal oder eine Folge von Chirp-Signalen verbunden. Das Signal-Angepasste-Filter 20 ist ausgangsseitig über eine Verbindungsleitung 50 mit der Verarbeitungseinheit 24 verbunden. Die Verarbeitungseinheit 24 ist ausgebildet, in Abhängigkeit von dem über die Verbindungsleitung 48 und über die Verbindungsleitung 50 empfangenen Signal mit der konstanten Trägerfrequenz und/oder Chirp-Signal einen Abstand 2, eine Geschwindigkeit oder eine Beschleunigung zwischen dem Ultraschallwandler 3 und einem Objekt 30, welches in diesem Ausführungsbeispiel durch ein Fahrzeug gebildet ist, zu ermitteln. Die Verarbeitungseinheit 24 ist ausgebildet, ein Ausgangssignal zu erzeugen, welches den Abstand 2 oder eine zeitliche Ableitung des Abstandes, insbesondere die Geschwindigkeit oder die Beschleunigung oder eine Kombination aus diesen repräsentiert und dieses ausgangsseitig an einen Ausgang 32 zu senden. Die Verarbeitungseinheit 24 ist auch über eine Verbindungsleitung 52, insbesondere einer so gebildeten Rückkopplung, mit dem Sendepulsmodulator 5 verbunden. Die Verarbeitungseinheit 24 ist ausgebildet, in Abhängigkeit von dem Ausgangssignal, beispielsweise dem ermittelten Abstand 2 ein Steuersignal zum Auswählen einer Sendepuls-Art eines zu erzeugenden Sendepulses zu erzeugen und dieses ausgangsseitig über die Verbindungsleitung 52 an den Sendepulsmodulator 5 zu senden. Die Erfassungsvorrichtung 1 kann so in Abhängigkeit von einer Objektszene zueinander verschiedene Sendepulse erzeugen und so die Sendepuls-Art der Objektszene anpassen.

Beispielsweise kann eine Pulspausendauer - insbesondere zum Erfassen größerer Abstände 2, beispielsweise 100 Millisekunden betragen. Eine Pulspausendauer zum Erfassen kürzerer Abstände 2 kann beispielsweise zwischen 10 und 30 Millisekunden betragen. Der Ultraschallwandler 3 ist ausgebildet, in Abhängigkeit von den empfangenen Ultraschallwellen 12 ein - den reflektierten Sendepuls repräsentierendes - Antwortsignal zu erzeugen, und dieses über die Verbindungsleitung 42 an den Vorverstärker 14 zu senden. Der Vorverstärker 14 ist in diesem Ausführungsbeispiel mit einer Filterfunktion ausgebildet, so dass der Vorverstärker zusätzlich zu einer Verstärkungsfunktion auch die Funktion eines Band-Durchlass-Filters aufweist, wobei das Band-Durchlass-Filter einen Durchlass-Frequenzbereich aufweist, welcher die Frequenzen der Sendepulsabschnitte 7 und 9 einschließt.

Die Erfassungsvorrichtung 1 kann anstelle des Filters 16 auch ein Hochpassfilter 17 oder ein Tiefpassfilter 18 aufweisen. Das Hochpass Filter 17 weist beispielsweise eine Cut-On-Frequenz im Bereich der Resonanzfrequenz des Ultraschallwandlers 3 auf. Das Tiefpassfilter 18 weist beispielsweise eine Cut-On-Frequenz im Bereich der konstanten Trägerfrequenz, insbesondere der Resonanzfrequenz des Ultraschallwandlers 3 auf. Der Empfänger 10 ist ausgebildet, im Falle eines Down-Chirp-Signals das Hochpassfilter 17 zu aktivieren, und im Falle eines Up-Chirp-Signals das Tiefpassfilter 18 zu aktivieren. Beispielsweise kann der Empfänger 10 ausgebildet sein, die Resonanzfrequenz des Ultraschallwandlers anhand eines Ausschwingens des Ultraschallwandlers zu ermitteln und die Bandsperrfrequenz, die Cut-On-Frequenz oder die Cut-Off-Frequenz der ermittelten Resonanzfrequenz nachzuführen.

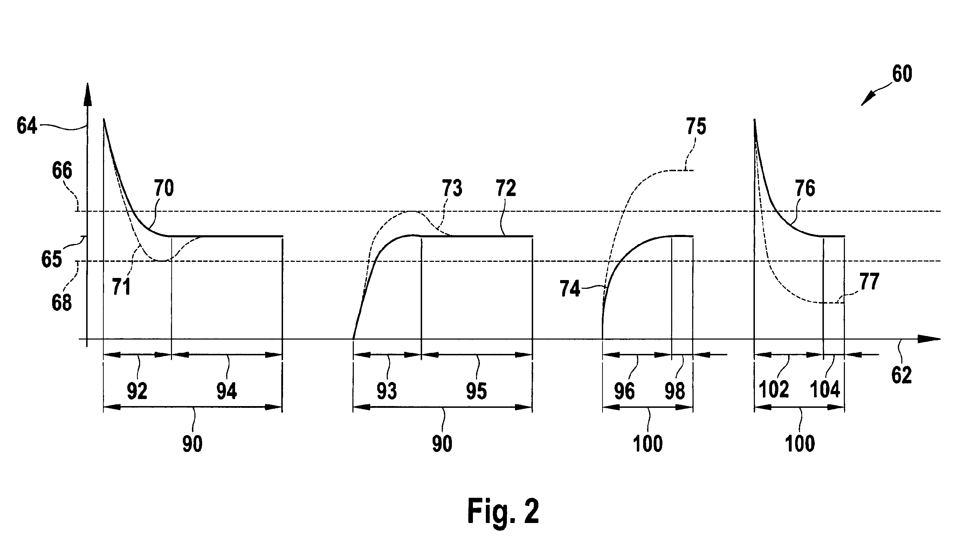

Figur 2 zeigt ein Ausführungsbeispiel für gepulste Sendesignale, welche beispielsweise von dem Sendepulsmodulator 5 der Erfassungsvorrichtung 1 in Figur 1 erzeugt worden sind in einem Diagramm 60. Das Diagramm 60 weist eine Ordinate 64 und eine Abszisse 62 auf, wobei die Abszisse 62 eine Zeitachse, und die Ordinate 64 eine Frequenzachse repräsentiert. Das Diagramm 60 zeigt auch eine Resonanzfrequenz 65 eines Ultraschallwandlers - beispielsweise des Ultraschallwandlers 3 in Figur 1. Das Diagramm 60 zeigt auch eine obere Grenzfrequenz 66 einer Frequenzbandbreite des Ultraschallwandlers im Bereich der Resonanzfrequenz 65, und eine untere Grenzfrequenz 68 im Bereich der Frequenzbandbreite des Ultraschallwandlers um mit ihr Resonanzfrequenz 65. Die obere Grenzfrequenz 66 und die untere Referenzfrequenz 68 sind jeweils von einer Dämpfung - und somit von einer Güte - des Ultraschallwandlers abhängig und können beispielsweise jeweils einer Dämpfung der Amplitude der Resonanzfrequenz um jeweils 3 Dezibel entsprechen. Beispielsweise können die Grenzfrequenzen 66 und 68 jeweils 3 Kilohertz von der konstanten Trägerfrequenz, insbesondere der Resonanzfrequenz 66 beabstandet sein.

Das Diagramm 60 zeigt auch eine Kurve 70, eine Kurve 72, eine Kurve 74 und eine Kurve 76, welche jeweils einen zeitabhängigen Frequenzverlauf für einen beispielhaften Sendepuls mit einer zueinander verschiedenen Sendepuls-Art repräsentieren. Der Sendepuls gemäß der Kurve 70 weist eine Sendepulsdauer 90 auf. Der Sendepuls gemäß der Kurve 70 weist auch einen Sendepulsabschnitt 94 mit einer konstanten Trägerfrequenz, und einen Sendepulsabschnitt 92 mit einer zeitlich abnehmenden Trägerfrequenz auf. Der Sendepulsabschnitt 94 weist eine längere Sendepulsabschnittsdauer auf als der Sendepulsabschnitt 92.

Der Sendepulsabschnitt 92 weist einen abnehmenden Frequenzverlauf auf, welcher einem Verlauf eines positiv anwachsenden linken Parabelastes, insbesondere im vierten Quadranten, entspricht. Dargestellt ist auch ein Kurvenverlauf 71, welcher ein Überschwingen repräsentiert, so dass der Ultraschallwandler im Frequenzbereich zwischen der oberen Grenzfrequenz 66 und der unteren Grenzfrequenz 68 insbesondere lange andauernd zum Schwingen angeregt wird.

Dargestellt ist auch eine Kurve 72, welche einen zeitlichen Frequenzverlauf eines Sendepulses repräsentiert, welcher beispielsweise von dem Sendepulsmodulator 5 erzeugt worden ist. Der Sendepuls gemäß der Kurve 72 weist einen Sendepulsabschnitt 93 mit einer ansteigenden Trägerfrequenz auf und einen Sendepulsabschnitt 95 mit einer konstanten Trägerfrequenz auf. Der Sendepulsabschnitt 93 weist einen Frequenzverlauf entsprechend eines negativ anwachsenden Parabelastes auf. Die Sendepulsdauer 90 des Sendepulses gemäß der Kurve 72 entspricht der Sendepulsdauer 90 des Sendepulses gemäß der Kurve 70. Dargestellt ist auch ein gestrichelter Kurvenverlauf 73, welcher ein Überschwingen des Frequenzverlaufes der Kurve 72 repräsentiert, so dass der Frequenzverlauf im Verhältnis zur Kurve 72 länger andauernd im Bereich zwischen der unteren Grenzfrequenz 68 und der oberen Grenzfrequenz 66 liegt.

Die Kurve 74 repräsentiert einen Frequenzverlauf eines Sendepulses mit einem Sendepulsabschnitt 96 mit zunehmender Trägerfrequenz und einem Sendepulsabschnitt 98 mit konstanter Trägerfrequenz. Der Sendepuls weist eine Sendepulsdauer 100 auf. Eine gestrichelt dargestellte Kurve 75 zeigt eine Variante des Sendepulses mit einem überschwingenden Chirp-Signalanteil, welcher über der oberen Grenzfrequenz 66 endet, wodurch eine Ausschwingzeit im Vergleich zur Resonanzfrequenz verkürzt ist.
Das Diagramm 60 zeigt auch eine Kurve 76 mit einem abnehmenden Frequenzverlauf während eines Sendepulsabschnittes 102 und einem konstanten, auf der Resonanzfrequenz 65 verlaufenden Frequenzverlauf während eines Sendepulsabschnittes 104. Der Sendepulsabschnitt 102 entspricht - wie der Sendepulsabschnitt 92 - einem positiv anwachsenden Parabelast. Dargestellt ist auch eine Variante des Sendepulses mit einem überschwingenden Frequenzverlauf, 77, durch den die Frequenzbandbreite eines Ultraschallwandlers zwischen der oberen Grenzfrequenz 66 und der unteren Grenzfrequenz 68 zum Anregen des Ultraschallwandlers ausgenutzt wird. Der Sendepuls weist eine Sendepulsdauer 100 auf.

Die Sendepulsdauer 100 beträgt beispielsweise 0,3 Millisekunden. Die Sendepulsdauer 90 beträgt beispielsweise zwischen 1 Millisekunde und 10 Millisekunden.

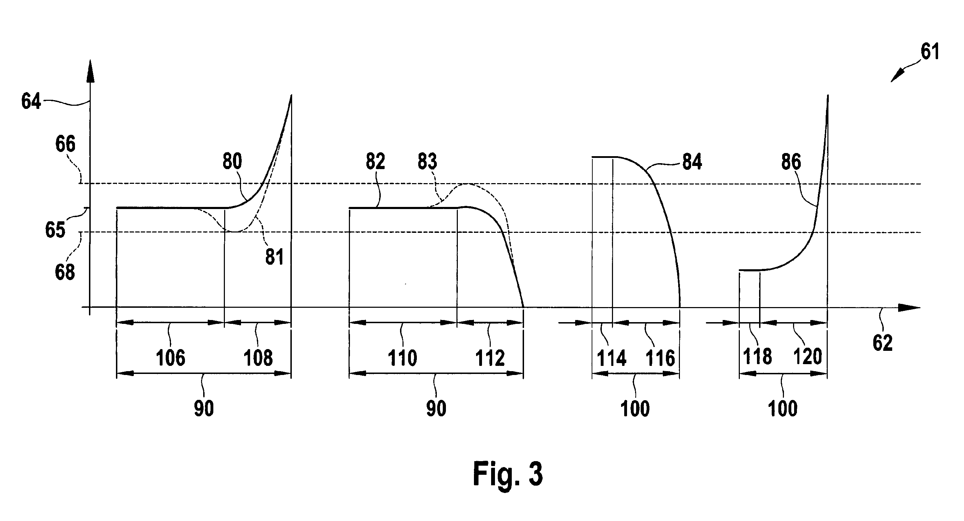

Figur 3 zeigt Ausführungsbeispiele für Frequenzverläufe von Sendepulsen mit jeweils zueinander verschiedenen Sendepuls-Arten. Dargestellt ist ein Diagramm 61 mit einer Kurve 80, einer Kurve 82, einer Kurve 84 und einer Kurve 86. Das Diagramm 61 weist eine Ordinate 64 und eine Abszisse 62 auf, wobei die Abszisse 62 eine Zeitachse, und die Ordinate 64 eine Frequenzachse repräsentiert.

Die Kurve 80 repräsentiert einen Frequenzverlauf eines Sendepulses mit einem Sendepulsabschnitt 106 mit konstanter Trägerfrequenz, welche der Resonanzfrequenz 65 entspricht. Die Kurve 80 repräsentiert auch einen Sendepulsabschnitt 108 mit einer zunehmenden Trägerfrequenz. Der Kurvenverlauf des Sendepulsabschnitts 108 entspricht einem rechten Parabelast einer positiv anwachsenden Parabel, insbesondere im ersten Quadranten. Dargestellt ist auch eine Variante des Sendepulses mit einem überschwingenden Frequenzverlauf 81, durch den die Frequenzbandbreite eines Ultraschallwandlers zwischen der oberen Grenzfrequenz 66 und der unteren Grenzfrequenz 68 zum Anregen des Ultraschallwandlers ausgenutzt wird. Der Sendepuls weist eine Sendepulsdauer 90 auf.

Die Kurve 82 repräsentiert einen Frequenzverlauf eines Sendepulses mit einem Sendepulsabschnitt 110 mit konstanter Trägerfrequenz, welche der Resonanzfrequenz 65 entspricht. Die Kurve 82 repräsentiert auch einen Sendepulsabschnitt 112 mit einer abnehmenden Trägerfrequenz. Der Kurvenverlauf des Sendepulsabschnitts 112 entspricht einem rechten Parabelast einer negativ anwachsenden Parabel, insbesondere im zweiten Quadranten. Dargestellt ist auch eine Variante des Sendepulses mit einem überschwingenden Frequenzverlauf 83, durch den die Frequenzbandbreite eines Ultraschallwandlers zwischen der oberen Grenzfrequenz 66 und der unteren Grenzfrequenz 68 zum Anregen des Ultraschallwandlers ausgenutzt wird. Der Sendepuls weist eine Sendepulsdauer 90 auf.

Die Kurve 84 repräsentiert einen Frequenzverlauf eines Sendepulses mit einem Sendepulsabschnitt 114 mit konstanter Trägerfrequenz, welche größer ist als die obere Grenzfrequenz 66. Die Kurve 84 repräsentiert auch einen Sendepulsabschnitt 116 mit einer abnehmenden Trägerfrequenz. Der Kurvenverlauf des Sendepulsabschnitts 116 entspricht einem rechten Parabelast einer negativ anwachsenden Parabel, insbesondere im zweiten Quadranten. Der Sendepuls weist eine Sendepulsdauer 100 auf.
Die Kurve 86 repräsentiert einen Frequenzverlauf eines Sendepulses mit einem Sendepulsabschnitt 118 mit konstanter Trägerfrequenz, welche kleiner ist als die untere Grenzfrequenz 66. Die Kurve 84 repräsentiert auch einen Sendepulsabschnitt 120 mit einer zunehmenden Trägerfrequenz. Der Kurvenverlauf des Sendepulsabschnitts 120 entspricht einem rechten Parabelast einer positiv anwachsenden Parabel, insbesondere im ersten Quadranten. Der Sendepuls weist eine Sendepulsdauer 100 auf.

Die Sendepulsdauer 100 beträgt beispielsweise 0,3 Millisekunden. Die Sendepulsdauer 90 beträgt beispielsweise zwischen 1 Millisekunde und 10 Millisekunden.

Die Sendepulse mit den Kurvenformen gemäß Figur 2, jeweils beginnend mit einem Sendepulsabschnitt entsprechend einem Chirp-Signal bewirken jeweils vorteilhaft, dass eine in den Ultraschallwandler eingebrachte Sendeenergie zum Ausschwingen auf der Resonanzfrequenz - während des Sendepulsabschnittes mit konstanter Frequenz - beiträgt und so zum Senden eines Sendepulses zum Erfassen großer Abstände genutzt werden kann. Die Verarbeitungseinheit 24 in Figur 1 kann dazu beispielsweise ein entsprechendes Steuersignal zum Erzeugen eines solchen Sendepulses an den Sendepulsmodulator senden.

Die Sendepulse mit den Kurvenformen gemäß Figur 3, jeweils beginnend mit einem Sendepulsabschnitt mit konstanter Trägerfrequenz gefolgt von einem Sendepulsabschnitt mit zunehmender und/oder abnehmender Trägerfrequenz bewirken vorteilhaft, dass dem Ultraschallwandler im Bereich eines Sendepulsendes - insbesondere bei der Resonanzfrequenz - während des Sendepulsabschnittes mit zunehmender und/oder abnehmender Trägerfrequenz Energie entzogen wird, so dass eine Amplitude des Ausschwingens gering ist. Der Ultraschallwandler ist dann schneller bereit, einen reflektierten Sendepuls zu empfangen. Die Verarbeitungseinheit 24 in Figur 1 kann dazu beispielsweise ein entsprechendes Steuersignal zum Erzeugen eines solchen Sendepulses an den Sendepulsmodulator senden.

Die Sendepulse mit den Kurven in Figur 2 und 3 mit der insbesondere kurzen Sendepulsdauer 100 sind zum Erfassen von kleinen Abständen vorteilhaft, die Sendepulse mit der insbesondere langen Sendepulsdauer 90 sind zum Erfassen von großen Abständen vorteilhaft. Eine Pulspausendauer zwischen aufeinanderfolgenden Sendepulsen beträgt beispielsweise zum Erfassen kleiner Abstände vorteilhaft 10 Millisekunden, zum Erfassen großer Abstände 100 Millisekunden.

Die Sendepulsanteile mit zunehmender Trägerfrequenz nutzen den Vorteil tiefer Frequenzen hinsichtlich geringerer Dämpfung durch Dissipation als bei höheren Frequenzen, so dass mit weniger Sendeenergie große Abstände erfasst werden können. Die Verarbeitungseinheit 24 in Figur 1 kann dazu beispielsweise ein entsprechendes Steuersignal zum Erzeugen eines solchen Sendepulses an den Sendepulsmodulator senden.

Die Sendepulsabschnitte mit dem überschwingenden Frequenzverlauf können beispielsweise jeweils durch ein Polynom dritten, vierten, fünften, sechsten oder siebten Grades gebildet sein.

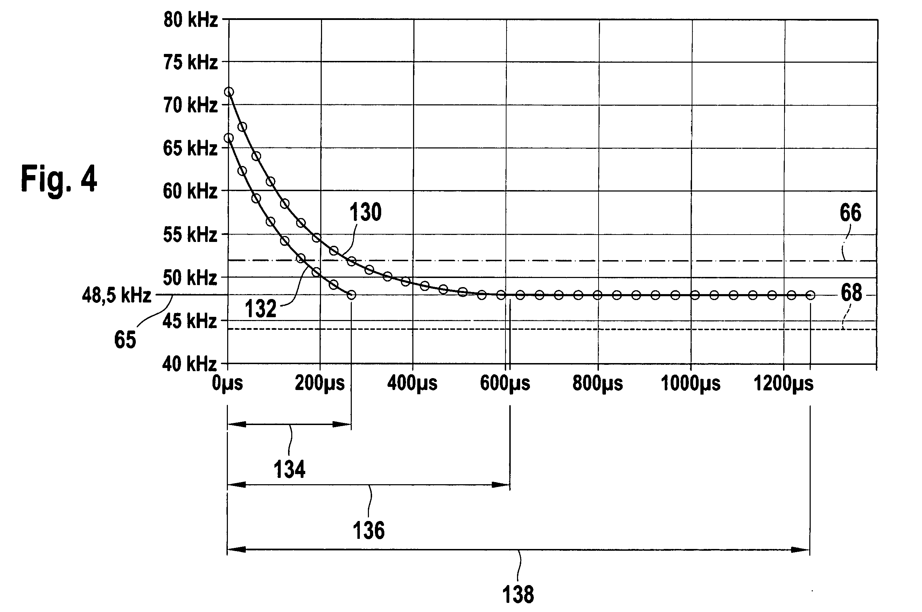

Figur 4 zeigt ein Ausführungsbeispiel für einen zeitlichen Frequenzverlauf 130 eines langen Sendepulses und einen zeitlichen Frequenzverlauf 132 eines im Vergleich zu dem langen Sendepuls kurzen Sendepulses, jeweils in einem Diagramm. Eine Ordinate des Diagramms repräsentiert eine Frequenzachse und eine Abszisse des Diagramms repräsentiert eine Zeitachse. Eine Sendepulsdauer 138 des langen Sendepulses beträgt 1250 Mikrosekunden und kann beispielsweise zum Erfassen großer Abstände von dem Sendepulsmodulator 5 in Figur 1 erzeugt werden. Der kurze Sendepuls mit einer Sendepulsdauer 134, welche in diesem Ausführungsbeispiel 250 Mikrosekunden beträgt, kann beispielsweise zum Erfassen kleiner Abstände von dem Sendepulsmodulator 5 in Figur 1 erzeugt werden. Der lange Sendepuls weist einen Sendepulsabschnitt 136 mit abnehmender Frequenz auf, an welchen ein Sendepulsabschnitt 137 mit konstanter Trägerfrequenz anschließt. Die Resonanzfrequenz 65 des Ultraschallwandlers beträgt in diesem Ausführungsbeispiel 48,5 Kilohertz und entspricht der konstanten Trägerfrequenz.
Die Sendepulse 132 und 130 enden jeweils auf der Resonanzfrequenz 65. Denkbar ist auch eine Ausführungsvariante, bei der die konstante Trägerfrequenz zwischen der oberen Grenzfrequenz 66 und der unteren Grenzfrequenz 68 beträgt. Die Grenzfrequenzen 66 und 68 können beispielsweise die bereits erwähnte 3-Dezibel-Dämpfungsgrenzfrequenz bilden, oder eine Grenzfrequenz, bei der der Ultraschallwandler 3 in Figur 1 noch eine zum Erfassen großer Abstände 19 hinreichende Sendeleistung erzeugen kann.

Vorteilhaft beträgt eine Frequenzdifferenz der Frequenzverläufe 132 und 130 während der Sendepulsdauer 134 fünf Kilohertz. Dadurch kann vorteilhaft ein Abstand zu einem Kraftfahrzeug sicher erfasst werden, welches sich mit einer Geschwindigkeit von 50 Stundenkilometern relativ zu dem Ultraschallsensor bewegt. Eine durch die Relativbewegung verursachte Doppler-Frequenzverschiebung hat dann noch einen kleinen Einfluss, so dass ein Unterscheiden des langen Sendepulses von dem kurzen Sendepuls hinreichend genau erfolgen kann.

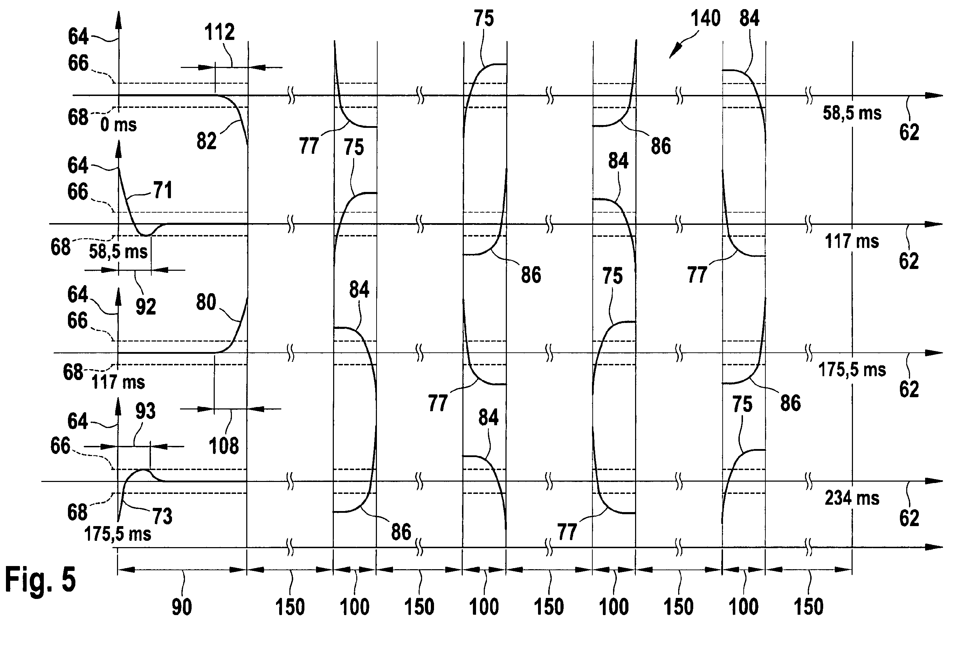

Figur 5 zeigt schematisch ein Diagramm 140. Das Diagramm 140 zeigt ein Ausführungsbeispiel für eine insbesondere von der Erfassungsvorrichtung 1 erzeugtes Sendesignal umfassend Sendepulse mit jeweils einer Sendepuls-Art und Pulspausen.
Das Diagramm 140 weist eine Zeitachse 62 und einer Frequenzachse 64 auf, wobei die Zeitachse 64 aus Gründen der Darstellung in vier untereinander angeordnete, zeitlich aneinander anschließende Abschnitte aufgeteilt ist.

Das Sendesignal beginnt in diesem Ausführungsbeispiel mit einem Sendepuls 82 mit einer Sendepuls-Art, welcher dem Sendepuls 82 in Figur 3 entspricht. Die Sendepulsdauer 90 des Sendepulses 82 beträgt in diesem Ausführungsbeispiel 6,5 Millisekunden. Dem Sendepuls 82 folgt eine Pulspause mit einer Pulspausendauer 150. Die Pulspausendauer beträgt in diesem Ausführungsbeispiel 10 Millisekunden. Auf die Pulspause folgt ein Sendepuls 77 mit einer Sendepuls-Art entsprechend dem Sendepuls 77 in Figur 2. Der Sendepuls 77 weist eine Sendepulsdauer 100 auf die in diesem Ausführungsbeispiel 0,5 Millisekunden beträgt. Dem Sendepuls 77 folgt wieder eine Pulspause, dieser folgt ein Sendepuls entsprechend dem Sendepuls 75. Dem Sendepuls 75 folgt eine Pulspause und ein Sendepuls entsprechend dem Sendepuls 86 in Figur 3. Dem Sendepuls 86 folgt, getrennt durch eine Pulspause mit der Pulspausendauer 150 ein Sendepuls 84 entsprechend dem Sendepuls 84 in Figur 3. Dem Sendepuls 84 folgt eine Pulspause mit der Pulspausendauer 150.

In einer weiteren Zeile der Zeitachse 62 des Diagramms 140 setzt das Sendesignal mit einem Sendepuls 71 entsprechend dem Sendepuls 71 in Figur 2 mit der Sendepulsdauer 90 fort. Dem Sendepuls 71 folgt eine Pulspause mit der Pulspausendauer 150. Auf die Pulspause folgt ein Sendepuls 75 mit einer Sendepuls-Art entsprechend dem Sendepuls 75 in Figur 2. Der Sendepuls 75 weist die Sendepulsdauer 100 auf. Dem Sendepuls 75 folgt wieder eine Pulspause, dieser folgt ein Sendepuls entsprechend dem Sendepuls 86. Dem Sendepuls 86 folgt eine Pulspause und ein Sendepuls entsprechend dem Sendepuls 84 in Figur 3. Dem Sendepuls 84 folgt, getrennt durch eine Pulspause mit der Pulspausendauer 150 ein Sendepuls 77 entsprechend dem Sendepuls 77 in Figur 2. Dem Sendepuls 77 folgt eine Pulspause mit der Pulspausendauer 150.

In einer weiteren Zeile des Diagramms 140 setzt das Sendesignal mit einem Sendepuls 80 entsprechend dem Sendepuls 80 in Figur 3 mit der Sendepulsdauer 90 fort. Dem Sendepuls 80 folgt eine Pulspause mit der Pulspausendauer 150. Auf die Pulspause folgt ein Sendepuls mit einer Sendepuls-Art entsprechend dem Sendepuls 84 in Figur 2. Der Sendepuls 84 weist die Sendepulsdauer 100 auf. Dem Sendepuls 84 folgt wieder eine Pulspause, dieser folgt ein Sendepuls 77 entsprechend dem Sendepuls 77 in Figur 2. Dem Sendepuls 77 folgt eine Pulspause und ein Sendepuls entsprechend dem Sendepuls 75 in Figur 2. Dem Sendepuls 75 folgt, getrennt durch eine Pulspause mit der Pulspausendauer 150 ein Sendepuls 86 entsprechend dem Sendepuls 86 in Figur 2. Dem Sendepuls 86 folgt eine Pulspause mit der Pulspausendauer 150.

In einer weiteren Zeile des Diagramms 140 setzt das Sendesignal mit einem Sendepuls 73 entsprechend dem Sendepuls 73 in Figur 2 mit der Sendepulsdauer 90 fort. Dem Sendepuls 73 folgt eine Pulspause mit der Pulspausendauer 150. Auf die Pulspause folgt ein Sendepuls 86 mit einer Sendepuls-Art entsprechend dem Sendepuls 86 in Figur 3. Der Sendepuls 86 weist die Sendepulsdauer 100 auf. Dem Sendepuls 86 folgt wieder eine Pulspause, dieser folgt ein Sendepuls 84 entsprechend dem Sendepuls 84 in Figur 3. Dem Sendepuls 84 folgt eine Pulspause und ein Sendepuls 77 entsprechend dem Sendepuls 77 in Figur 2. Dem Sendepuls 77 folgt, getrennt durch eine Pulspause mit der Pulspausendauer 150 ein Sendepuls 75 entsprechend dem Sendepuls 75 in Figur 2. Dem Sendepuls 75 folgt eine Pulspause mit der Pulspausendauer 150.
Beispielsweise kann die Pulspausendauer 150 das zehnfache der Sendepulsdauer 90 beziehungsweise 100 betragen.

Mittels der Sendepulsfolge zwischen dem insbesondere langen Sendepuls 82 und dem insbesondere langen Sendepuls 71 kann beispielsweise ein Objekt in einem kleinen Abstand zum Ultraschallwandler, beispielsweise 0,5 Meter erfasst werden. Mittels der Sendepulse 82 und 71, die beim Empfangen gut voneinander unterschieden werden können, da die Sendepuls-Art zueinander verschieden ist, kann ein Objekt in im Vergleich zu dem kleinen Abstand größeren Abstand beispielsweise zwischen 10 und 30 Metern erfasst werden. Die zwischen den Sendepulsen mit der Sendepulsdauer 90 gesendeten Sendepulse mit der Sendepulsdauer 100 unterscheiden sich unmittelbar aufeinanderfolgend durch die Richtung der Frequenzänderung, so folgt beispielsweise auf einen Sendepuls umfassend einen Down-Chirp ein Sendepuls umfassend einen Up-Chirp und auf einen Sendepuls umfassend einen Up-Chirp ein Sendepuls umfassend einen Down-Chirp.

Vorteilhaft lassen sich die zwischen den langen Sendepulsen gesendeten kurzen Sendepulse beim Empfangen eines Echos derselben gut voneinander vom Empfänger trennen, da sich Frequenz-Zeitverläufe der kurzen Sendepulse mit zu- und/oder abnehmenden Trägerfrequenz voneinander unterscheiden und die gesendete und/oder empfangene Schalleistung geringer ist als bei den langen Sendepulsen mit konstanter Trägerfrequenz. Bei den kurzen Sendepulsen wird nämlich, über die Sendepulsdauer aufintegriert, eine geringere Sendeenergie abgegeben als bei den langen Sendepulsen. Aufgrund der filternden Wirkung des Ultraschallwandlers kann beim Empfangen der kurzen Sendepulse ebenfalls eine Reduzierung der empfangenen Signalenergie im Vergleich zu den langen Sendepulsen mit konstanter Trägerfrequenz bewirkt werden.

Vorteilhaft beginnt in einer Objektsituation in der Kreuzechos erwartet werden, das heißt wenn ein erster Wandler sendet und ein zweiter Wandler das entsprechende Echo empfängt, ein Sendepuls mit einem Sendepulsabschnitt mit zu- oder abnehmenden Frequenzverlauf, weil der empfangende Wandler in einer Nahfeldsituation das Echo vorteilhaft bereits empfangen kann, während der sendende Wandler noch sendet.

Vorteilhaft beginnt in einer Objektsituation in der Direktechos erwartet werden, der Sendepuls mit einem Sendepulsabschnitt mit konstantem Frequenzverlauf, gefolgt von einem Sendepulsabschnitt mit zu- oder abnehmender Trägerfrequenz, deren Trägerfrequenz am Ende des Sendepulses von der Resonanzfrequenz verschieden ist, um dem Ultraschallwandler so Schwingungsenergie zu entziehen und mittels des Sendepulses mit zu- oder abnehmenden Trägerfrequenz aktiv zu bedämpfen.

Vorteilhaft wird zwischen aufeinanderfolgenden langen Sendepulsen mit der Sendepulsdauer 90 wenigstens zwei oder mehrere Sendepulse mit kurzer Sendepulsdauer 100 gesendet. Dadurch kann in der Objekterfassung im Nahfeld eine schnelle Aktualisierung eines Erfassungsergebnisses betreffend die Objektsituation erfolgen.

Vorteilhaft weisen insbesondere mittelbar aufeinanderfolgend gesendete Sendepulse mit der langen Sendepulsdauer 90 eine zueinander verschiedene Sendepulsart auf. Dadurch können die Sendepulse beim Empfangen gut voneinander unterschieden werden.

## Patentansprüche

1. Erfassungsvorrichtung (1) zur Erfassung eines Umfeldes eines Fahrzeugs, mit einer Schnittstelle zu einem Ultraschallwandler (3) und mit einem über die Schnittstelle mit dem wenigstens einen Ultraschallwandler (3) verbundenen Sendepulsmodulator (5),
und mit einer mit dem Ultraschallwandler (3) verbundenen Empfänger (10), wobei der Sendepulsmodulator (5) ausgebildet ist, ein pulsmoduliertes Sendesignal (7, 9) zu erzeugen und dieses zum Schallwandeln an den Ultraschallwandler (3) zu senden, und wobei der Empfänger (10) ausgebildet ist, ein von dem Ultraschallwandler (3) erzeugtes Antwortsignal zu empfangen und in Abhängigkeit des Antwortsignals einen Abstand (2),
und ein den Abstand (2) repräsentierendes Ausgangssignal zu erzeugen,
**dadurch gekennzeichnet, dass**
das pulsmodulierte Sendesignal (7, 9) zeitlich aufeinanderfolgende Sendepulse mit einer Sendepulsdauer (90, 100) aufweist, wobei wenigstens ein Sendepuls der Sendepulse einen zeitlichen Sendepulsabschnitt (92, 93, 96, 102, 108, 112, 116, 120) mit einer zu- und abnehmenden Trägerfrequenz und einen zeitlichen Sendepulsabschnitt (94, 95, 98, 104, 106, 110, 114, 118) mit einer konstanten Trägerfrequenz (65) aufweist, so dass die Trägerfrequenz durch die Sendepulse moduliert ist, wobei bei dem wenigstens einen Sendepuls (71, 73, 75, 77, 81, 83) der Sendepulsabschnitt mit der zu- und abnehmenden Trägerfrequenz einen zeitlichen Sendepulsabschnitt aufweist, bei dem durch das Zu- und Abnehmen eine Scheitelfrequenz gebildet ist, welche im Bereich an einen Anschluss an den Sendepulsabschnitt mit der konstanten Trägerfrequenz (65) ein Überschwingen der konstanten Trägerfrequenz (65) bildet.

2. Erfassungsvorrichtung (1) nach Anspruch 1,
**dadurch gekennzeichnet, dass**
bei wenigstens einem Sendepuls (70, 72, 80, 82) der Sendepulsabschnitt mit der konstanten Trägerfrequenz (94, 95, 106, 110) länger andauert als der Sendepulsabschnitt (92, 93, 108, 112) mit der zu- und abnehmenden Trägerfrequenz.

3. Erfassungsvorrichtung (1) nach Anspruch 1 oder 2,
**dadurch gekennzeichnet, dass**
bei wenigstens einem Sendepuls (70, 72, 74, 76) der Sendepulsabschnitt mit der konstanten Trägerfrequenz auf den Sendepulsabschnitt mit der zu- und abnehmenden Trägerfrequenz anschließend folgt.

4. Erfassungsvorrichtung (1) nach einem der vorhergehenden Ansprüche,
**dadurch gekennzeichnet, dass**
bei wenigstens einem Sendepuls (80, 82, 84, 86) der Sendepulsabschnitt mit der zu- und abnehmenden Trägerfrequenz auf den Sendepulsabschnitt mit der konstanten Trägerfrequenz anschließend folgt.

5. Erfassungsvorrichtung (1) nach einem der vorhergehenden Ansprüche,
**dadurch gekennzeichnet, dass**
der Sendepulsabschnitt (92, 93, 96, 102, 108, 112, 116, 120) mit der zu- und abnehmenden Trägerfrequenz einen Kurvenverlauf aufweist, welcher einem Polynom wenigstens zweiten Grades folgt.

6. Erfassungsvorrichtung (1) nach einem der vorhergehenden Ansprüche,
**dadurch gekennzeichnet, dass**
die zeitlich aufeinanderfolgenden Sendepulse Sendepulse (130, 132) mit jeweils wenigstens zwei zueinander verschiedenen Sendepulsdauern (134, 138, 90, 100) aufweisen.

7. Erfassungsvorrichtung (1) nach einem der vorhergehenden Ansprüche,
**dadurch gekennzeichnet, dass**
die Erfassungsvorrichtung (1) ein Bandsperrfilter (28, 16) aufweist, welches im Signalpfad zwischen dem Sendepulsmodulator und dem Empfänger angeordnet ist, wobei eine Bandsperrfrequenz, insbesondere in einem Übertragungsfrequenzgang, des Bandsperrfilters einer Resonanzfrequenz (65) des Ultraschallwandlers (3) entspricht.

8. Verfahren zum Erfassen eines Abstandes mittels Ultraschall, bei dem mittels Ultraschall (11, 12) zeitlich aufeinanderfolgende Sendepulse (70, 72, 74, 76, 80, 82, 84, 86) mit einer jeweiligen Sendepulsdauer (100, 90) erzeugt werden, wobei wenigstens ein Sendepuls zeitliche Sendepulsabschnitte (92, 93, 96, 102, 108, 112, 116, 120) aufweist, **dadurch gekennzeichnet, dass** wenigstens ein Sendepulsabschnitt eine zu- und abnehmenden Trägerfrequenz aufweist und wobei ein weiterer Sendepulsabschnitt eine konstante Trägerfrequenz (65) aufweist, und wobei diese beiden Sendepulsabschnitte zeitlich aneinander anschließen, wobei bei dem wenigstens einen Sendepuls (71, 73, 75, 77, 81, 83) der Sendepulsabschnitt mit der zu- und abnehmenden Trägerfrequenz einen zeitlichen Sendepulsabschnitt aufweist, bei dem durch das Zu- und Abnehmen eine Scheitelfrequenz gebildet ist, welche im Bereich an einen Anschluss an den Sendepulsabschnitt mit der konstanten Trägerfrequenz (65) ein Überschwingen der konstanten Trägerfrequenz (65) bildet.

9. Verfahren nach Anspruch 8,
**dadurch gekennzeichnet, dass**
der Sendepulsabschnitt (92, 93, 96, 102, 108, 112, 116, 120) mit der zu- und abnehmenden Trägerfrequenz einem Kurvenverlauf eines Polynoms wenigstens zweiten Grades folgt.

## Claims

1. Sensing apparatus (1) for sensing surroundings of a vehicle, having an interface to an ultrasonic transducer (3) and having a transmission pulse modulator (5) that is connected to the at least one ultrasonic transducer (3) via the interface, and having a receiver (10) that is connected to the ultrasonic transducer (3), wherein the transmission pulse modulator (5) is designed to produce a pulse-modulated transmission signal (7, 9) and to send it for sound conversion to the ultrasonic transducer (3), and wherein the receiver (10) is designed to receive a response signal produced by the ultrasonic transducer (3) and to take the response signal as a basis for producing a distance (2) and an output signal that represents the distance (2),
**characterized in that**
the pulse-modulated transmission signal (7, 9) has temporally successive transmission pulses having a transmission pulse duration (90, 100), wherein at least one transmission pulse from the transmission pulses has a transmission pulse period (92, 93, 96, 102, 108, 112, 116, 120) having an increasing and decreasing carrier frequency and has a transmission pulse period (94, 95, 98, 104, 106, 110, 114, 118) having a constant carrier frequency (65), as a result of which the carrier frequency is modulated by the transmission pulses, wherein in the case of the at least one transmission pulse (71, 73, 75, 77, 81, 83) the transmission pulse period having the increasing and decreasing carrier frequency has a transmission pulse period for which the increase and decrease form a peak frequency that forms an overshoot for the constant carrier frequency (65) in the region at a junction with the transmission pulse period having the constant carrier frequency (65).

2. Sensing apparatus (1) according to Claim 1,
**characterized in that**
in the case of at least one transmission pulse (70, 72, 80, 82) the transmission pulse period having the constant carrier frequency (94, 95, 106, 110) lasts longer than the transmission pulse period (92, 93, 108, 112) having the increasing and decreasing carrier frequency.

3. Sensing apparatus (1) according to Claim 1 or 2,
**characterized in that**
in the case of at least one transmission pulse (70, 72, 74, 76) the transmission pulse period having the constant carrier frequency subsequently follows the transmission pulse period having the increasing and decreasing carrier frequency.

4. Sensing apparatus (1) according to one of the preceding claims,
**characterized in that**
in the case of at least one transmission pulse (80, 82, 84, 86) the transmission pulse period having the increasing and decreasing carrier frequency subsequently follows the transmission pulse period having the constant carrier frequency.

5. Sensing apparatus (1) according to one of the preceding claims,
**characterized in that**
the transmission pulse period (92, 93, 96, 102, 108, 112, 116, 120) having the increasing and decreasing carrier frequency has a curve profile that follows an at least second-degree polynominal.

6. Sensing apparatus (1) according to one of the preceding claims,
**characterized in that**
the temporally successive transmission pulses have transmission pulses (130, 132) that each have at least two different transmission pulse durations (134, 138, 90, 100).

7. Sensing apparatus (1) according to one of the preceding claims,
**characterized in that**
the sensing apparatus (1) has a band-rejection filter (28, 16) that is arranged in the signal path between the transmission pulse modulator and the receiver, wherein a band-rejection frequency, particularly at one frequency response, of the band-rejection filter corresponds to a resonant frequency (65) of the ultrasonic transducer (3).

8. Method of sensing a distance by means of ultrasound, in which ultrasound (11, 12) is used to produce temporally successive transmission pulses (70, 72, 74, 76, 80, 82, 84, 86) having a respective transmission pulse duration (100, 90), wherein at least one transmission pulse has transmission pulse periods (92, 93, 96, 102, 108, 112, 116, 120), **characterized in that** at least one transmission pulse period has an increasing and decreasing carrier frequency and wherein a further transmission pulse period has a constant carrier frequency (65), and wherein these two transmission pulse periods are temporally adjacent, wherein in the case of the at least one transmission pulse (71, 73, 75, 77, 81, 83) the transmission pulse period having the increasing and decreasing carrier frequency has a transmission pulse period for which the increase and decrease form a peak frequency that forms an overshoot for the constant carrier frequency (65) in the region at a junction with the transmission pulse period having the constant carrier frequency (65).

9. Method according to Claim 8,
**characterized in that**
the transmission pulse period (92, 93, 96, 102, 108, 112, 116, 120) having the increasing and decreasing carrier frequency follows a curve profile for an at least second-degree polynomial.

## Revendications

1. Dispositif de saisie (1) qui saisit l'environnement d'un véhicule et qui présente une interface avec un convertisseur (3) d'ultrasons, un modulateur (5) d'impulsions d'émission relié par l'intermédiaire de l'interface au convertisseur ou aux convertisseurs (3) d'ultrasons et un récepteur (10) relié au convertisseur (3) d'ultrasons,
le modulateur (5) d'impulsions d'émission étant configuré pour former un signal d'émission (7, 9) modulé en impulsions et pour l'envoyer au convertisseur (3) d'ultrasons pour qu'il y soit converti en son,
le récepteur (10) étant configuré pour recevoir un signal de réponse formé par le convertisseur (3) d'ultrasons, pour déterminer une distance (2) en fonction du signal de réponse et pour former un signal de sortie qui représente la distance (2),
**caractérisé en ce que**
le signal d'émission (7, 9) modulé en impulsions présente des impulsions d'émission successives d'une durée (90, 100),
**en ce qu'**au moins une des impulsions d'émission présente une partie temporelle (92, 93, 96, 102, 108, 112, 116, 120) dont la fréquence porteuse augmente et diminue et une partie temporelle (94, 95, 98, 104, 106, 110, 114, 118) dont la fréquence porteuse (65) est constante, de sorte que la fréquence porteuse est modulée par les impulsions d'émission, et
**en ce que** la ou les impulsions d'émission (71, 73, 75, 77, 81, 83) de la partie des impulsions d'émission dont la fréquence porteuse augmente et diminue présente une partie temporelle dans laquelle une fréquence de pointe qui forme un dépassement de la fréquence porteuse (65) constante au niveau du raccord avec la partie des impulsions d'émission à fréquence porteuse (65) constante est formée par l'augmentation et la diminution.

2. Dispositif de saisie (1) selon la revendication 1, **caractérisé en ce qu'**au moins une impulsion d'émission (70, 72, 80, 82) de la partie (94, 95, 106, 110) des impulsions d'émission dont la fréquence porteuse est constante dure plus longtemps que la partie (92, 93, 108, 112) des impulsions d'émission dont la fréquence porteuse augmente et diminue.

3. Dispositif de saisie (1) selon les revendications 1 ou 2, **caractérisé en ce qu'**au moins une impulsion d'émission (70, 72, 74, 76) de la partie des impulsions d'émission dont la fréquence porteuse est constante suit la partie des impulsions d'émission dont la fréquence porteuse augmente et diminue.

4. Dispositif de saisie (1) selon l'une des revendications précédentes, **caractérisé en ce qu'**au moins une impulsion d'émission (80, 82, 84, 86) de la partie des impulsions d'émission dont la fréquence porteuse augmente et diminue suit la partie des impulsions dont la fréquence porteuse est constante.

5. Dispositif de saisie (1) selon l'une des revendications précédentes, **caractérisé en ce que** la partie (92, 93, 96, 102, 108, 112, 116, 120) des impulsions d'émission dont la fréquence porteuse augmente et diminue évolue selon une courbe qui suit un polynôme de degré deux ou plus.

6. Dispositif de saisie (1) selon l'une des revendications précédentes, **caractérisé en ce que** les impulsions d'émission successives présentent des impulsions d'émission (130, 132) dont au moins deux ont des durées (134, 138, 90, 100) différentes.

7. Dispositif de saisie (1) selon l'une des revendications précédentes, **caractérisé en ce que** le dispositif de saisie (1) présente un filtre (28, 16) bloque-bandes disposé dans le parcours de signaux allant du modulateur d'impulsions d'émission au récepteur et **en ce que** la fréquence de blocage de bande située en particulier dans une plage de fréquence de transfert du filtre bloque-bande correspond à la fréquence de résonance (65) du convertisseur (3) d'ultrasons.

8. Procédé de saisie de distance au moyen d'ultrasons (11, 12), dans lequel des impulsions successives d'émission (70, 72, 74, 76, 80, 82, 84, 86) de durée (100, 90) sont formées,
au moins une impulsion d'émissions présentant des parties temporelles (92, 93, 96, 102, 108, 112, 116, 120),
**caractérisé en ce que**
au moins une impulsion d'émission présente une partie dont la fréquence porteuse augmente et diminue, une autre partie des impulsions d'émission présentant une fréquence porteuse (65) constante,
**en ce que** ces deux parties des impulsions d'émission se succèdent et
**en ce que** la ou les impulsions d'émission (71, 73, 75, 77, 81, 73) de la partie des impulsions d'émission dont la fréquence porteuse augmente et diminue présente une partie temporelle dans laquelle une fréquence de pointe qui forme un dépassement de la fréquence porteuse (65) constante au niveau du raccord avec la partie des impulsions d'émission à fréquence porteuse (65) constante est formée par l'augmentation et la diminution.

9. Procédé selon la revendication 8, **caractérisé en ce que** la partie (92, 93, 96, 102, 108, 112, 116, 120) des impulsions d'émission dont la fréquence porteuse augmente et diminue évolue selon une courbe qui suit un polynôme de degré deux ou plus.
